# EUROPEAN PATENT APPLICATION

(11) **EP 0 816 146 A2**
(43) Date of publication of application: **07.01.1998**
(21) Application number: 97304805.1
(22) Date of filing: 02.07.1997
(51) Int. Cl.: B60H 1/00

(54) **Heat exchanger and methods for making heat exchangers**

(30) Priority: 02.07.1996 JP 191452/96
(71) Applicant: SANDEN CORPORATION, Isesaki-shi Gunma, 372 (JP)
(72) Inventor: Sasaki, Kenichi, c/o Sanden Corporation, Isesaki-shi, Gunma 372 (JP); Nii, Hiroshi, c/o Sanden Corporation, Isesaki-shi, Gunma 372 (JP)
(74) Representative: Jackson, Peter Arthur

(57) **Abstract**

A heat exchanger, particularly, a multi-tube heat exchanger (3), includes a heat exchanger body substantially reversing a direction of air flow in the heat exchanger body. An air conditioner has such a heat exchanger (3) in its air-flow reversing section (2). Because the air flow may be reversed in the heat exchanger (3) itself, it is not necessary to provide particular spaces for the flow of air into the heat exchanger (3) and the flow of air from the heat exchanger (3). Therefore, the heat exchanger (3) may be installed in a limited amount of space, and the air duct (1) forming air path of the air conditioner may be reduced in size. As a result, the size of the entire air conditioner may be greatly reduced.

## Description

The present invention relates to heat exchangers and methods for making heat exchangers, and more particularly to heat exchangers with improved space efficiency requiring less space for installation and air conditioners suitable for use in vehicles having such heat exchangers.

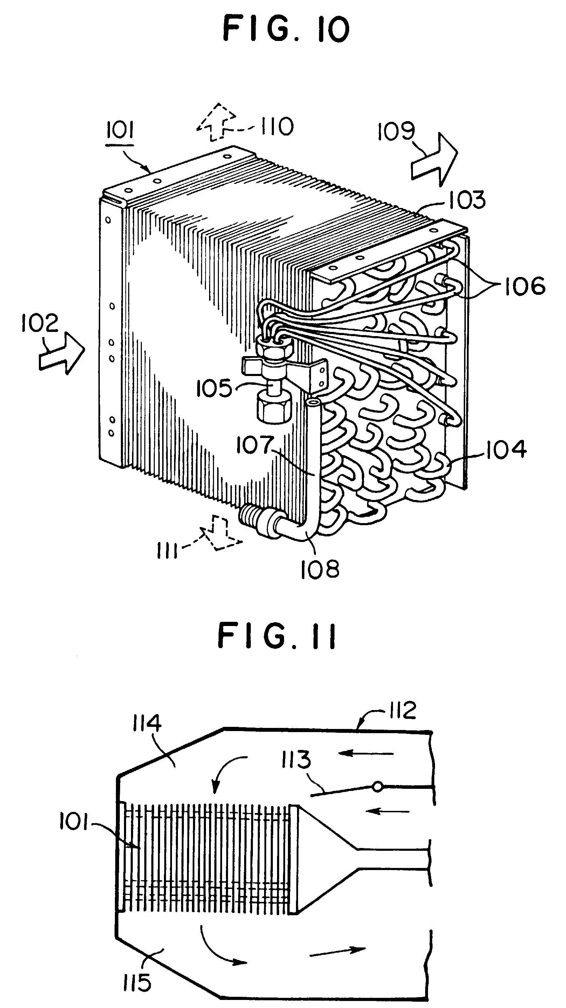

In an air conditioner suitable for use in vehicles, at least one heat exchanger for heating or cooling is provided in an air duct (an air path) of the air conditioner. The heat exchanger is constructed, for example, as shown in Fig. 10. Heat exchanger 101 depicted in Fig. 10 is a so-called fin-and-tube type heat exchanger. Air 102 flowing into heat exchanger 101 perpendicular to the front side passes through heat transfer tubes 104 between adjacent fins 103 as a straight flow. Heat or cooling media introduced through inlet pipe 105 are circulated in heat exchanger 101 via distributing pipes 106 and heat transfer tubes 104, and thereafter, discharged through joining pipe 107 and outlet pipe 108. During this circulation, heat exchange occurs with air passing through heat exchanger 101.

In such a fin-and-tube type heat exchanger 101, many louvers (not shown) frequently are provided on each fin 103 to improve the heat transfer performance. These louvers are arranged in a direction to cut the air flow passing through fins 103 to permit heat exchange to occur more effectively between the air and the louvers. Therefore, air 109 discharged from heat exchanger 101 frequently flows out in the same direction as the flow direction of air 102 entering the heat exchanger. In a fin-and-tube type heat exchanger without louvers, it is possible to control the flow of discharged air in a vertical direction 110 and/or 111, but, the efficiency of heat transfer is greatly reduced.

A fin-and-tube type heat exchanger, such as the one depicted in Fig. 10, has to be disposed in a limited amount of space in an air duct. For example, if heat exchanger 101 is disposed in an air-flow reversing section in an air duct, the structure is arranged as shown in Fig. 11. Fig. 11 is a cross-sectional view of an air-flow reversing section in air duct 112 wherein heat exchanger 101 is disposed at a position at which the air flow is reversed. Air, controlled by switching damper 113, flows into heat exchanger 101.

In such a structure, however, a space 114 is required to permit air to flow straight into heat exchanger 101 at the inflow side and a space 115 is required to permit air to flow straight out from the heat exchanger 101 at the outflow side. As a result, the size of the entire air duct 112 must be increased. The main purpose of such a disposition of heat exchanger 101 in the air-flow reversing section is to reduce the size of air duct 112, thereby reducing the size of the entire air conditioner and decreasing the space required for installation of the air conditioner. Therefore, if air duct 112 is constructed as a larger one as shown in Fig. 11, the size of the entire air conditioner cannot be reduced, and more space would be required for its installation.

It would be desirable to provide a heat exchanger which has improved space efficiency for installation in an air duct and effectively utilizes a space in the air duct even if the space for installation is limited, and an air conditioner using such a heat exchanger.

A heat exchanger according to the present invention comprises a heat exchanger body including means for reversing a direction of air flow within the heat exchanger body. The means for reversing the direction of air flow comprises a portion of the heat exchanger body formed substantially orthogonally to at least one partition. The heat exchanger is preferably a multi-tube heat exchanger comprising a pair of tanks separated from each other and a plurality of heat transfer tubes fluidly interconnected between the pair of tanks. Preferably, each of the heat transfer tubes has a circular cross-section. The heat transfer tubes may extend either in a substantially vertical direction or in a substantially horizontal direction. The heat exchanger may have various different cross-sections, for example, a rectangular, semicircular, or trapezoidal cross-section orthogonal to the heat transfer tubes.

Air conditioners according to the present invention have an air path with an air-flow reversing section and a heat exchanger provided in the air-flow reversing section. Such heat exchangers comprise a heat exchanger body substantially reversing a direction of air flow in the heat exchanger body. The heat exchanger used in the air conditioners is similarly formed in the above-described heat exchanger. The air path, may include a first air path and a second air path, each fluidly connected to the heat exchanger. The first and second air paths may be adjacent to each other and substantially in parallel to each other, and separated from each other by at least one partition. The first and second air paths may extend either in a substantially horizontal direction or in a substantially vertical direction.

In such heat exchanger and air conditioner, the direction of air flow is reversed in the heat exchanger body itself, but it is not necessary to provide a particular space for reversing the air flow direction on both the entrance and exit sides of the heat exchanger. Further, because the air-flow reversing portion is present in the heat exchanger body, a first air path connected to the entrance side of the heat exchanger and a second air path connected to the exit side of the heat exchanger may be formed, so that the air flow directions therein may be contrary to each other, and may be arranged adjacent to each other. As a result, the air path (air duct) may be smaller, and the size of the entire air conditioner may be significantly reduced.

Further objects, features, and advantages of the present invention will be understood from the following detailed description of embodiments of the present invention with reference to the appropriate figures.

Some embodiments of the invention will now be described with reference to the appropriate figures, which are given by way of example only, and are not intended to limit the present invention.

Fig. 1 is a partial cross-sectional view of an air conditioner using a heat exchanger according to a first embodiment of the present invention.

Fig. 2 is a cutaway perspective view of the air conditioner depicted in Fig. 1.

Fig. 3 is a partial cross-sectional view of an air conditioner using a heat exchanger according to a second embodiment of the present invention.

Fig. 4 is a partial cross-sectional view of an air conditioner using a heat exchanger according to a third embodiment of the present invention.

Fig. 5 is a partial cross-sectional view of an air conditioner using a heat exchanger according to a fourth embodiment of the present invention.

Fig. 6 is a partial cross-sectional view of an air conditioner using a heat exchanger according to a fifth embodiment of the present invention.

Fig. 7 is a partial cross-sectional view of an air conditioner according to a modification of the embodiment depicted in Fig. 6.

Fig. 8 is a partial cross-sectional view of an air conditioner using a heat exchanger according to a sixth embodiment of the present invention.

Fig. 9 is a partial cross-sectional view of an air conditioner according to a modification of the embodiment depicted in Fig. 8.

Fig. 10 is a perspective view of a known heat exchanger.

Fig. 11 is a partial cross-sectional view of an air conditioner using the heat exchanger depicted in Fig. 10.

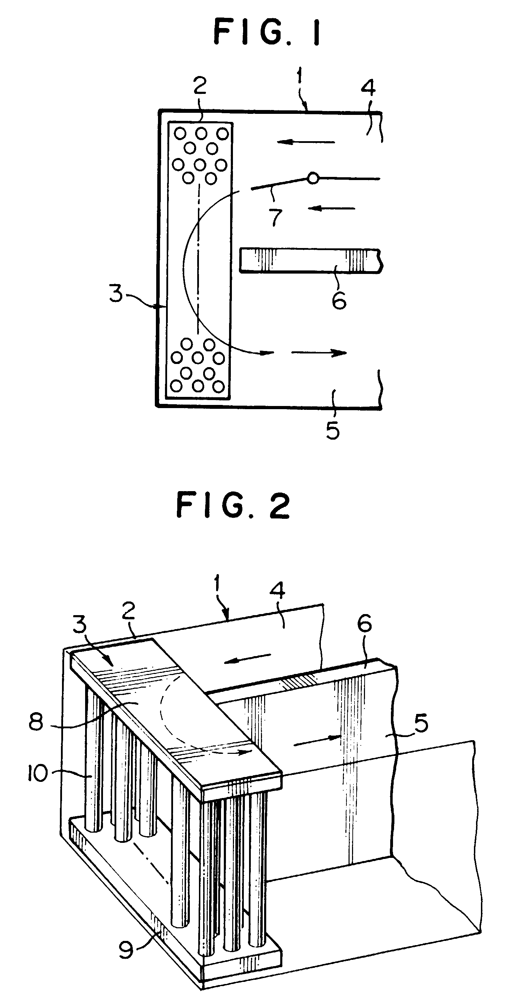

Referring to Figs. 1 and 2, an air conditioner with a heat exchanger 3 is depicted according to a first embodiment of the present invention. Heat exchanger 3 is disposed in air-flow reversing section 2 of air duct 1 (an air path of the air conditioner).

Air duct 1 has a first air path 4 adjacent to an entrance side of heat exchanger 3 as an inflow air path and a second air path 5 adjacent to an exit side of heat exchanger 3 as an outflow air path. Air paths 4 and 5 are adjacent to each other, separated by partition 6, and extend parallel to each other. Air paths 4 and 5 communicate with each other through air-flow reversing section 2. In this embodiment, a switching damper 7 is provided in first air path 4 for controlling the inflow air.

Heat exchanger 3 is a multi-tube heat exchanger having a rectangular cross-section orthogonal to heat transfer tubes 10. Heat exchanger 3 has a pair of tanks 8 and 9 separated from each other (in this embodiment, upper and lower tanks) and a plurality of heat transfer tubes 10 fluidly interconnecting tanks 8 and 9. Each heat transfer tube 10 has a circular cross-section. Heat exchange media introduced through an inlet pipe (not shown) are circulated in heat exchanger 3 in a predetermined path, and then discharged through an outlet pipe (not shown). In this embodiment, as depicted in Fig. 2, heat transfer tubes 10 extend in a vertical direction and are parallel to each other.

In such a heat exchanger 3, because the air flow direction is not substantially restricted in the heat exchanger body, the flow direction of the air having entered into heat exchanger 3 from first air path 4 is reversed in the heat exchanger body of heat exchanger 3. Air having the reversed flow direction is discharged from heat exchanger 3 into second air path 5. Therefore, it is not necessary to provide particular spaces on the entrance side and exit side of a heat exchanger as shown in Fig. 11. As a result, the entire air duct 1 may be smaller. By this reduction in the size of air duct 1, the size of the entire air conditioner may also be greatly reduced. Namely, a heat exchanger and an air conditioner having such a heat exchanger with an improved space efficiency may be obtained.

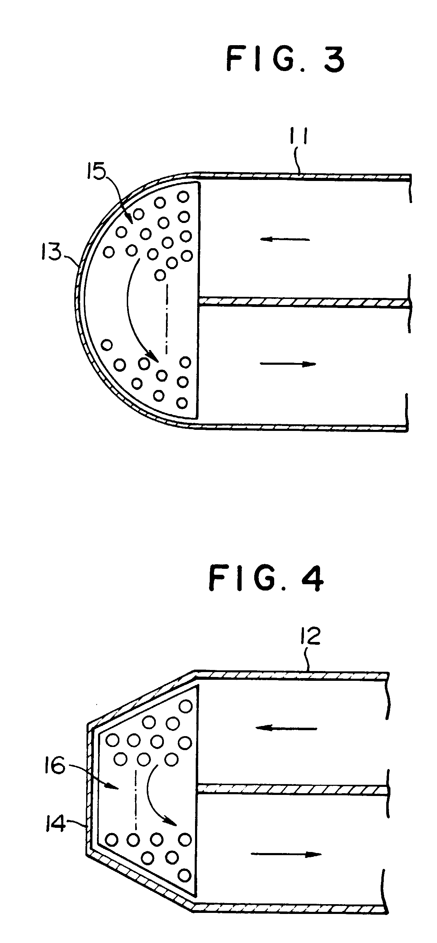

Fig. 3 depicts an air conditioner using a multi-tube heat exchanger 15 according to a second embodiment of the present invention. Heat exchanger 15 is disposed in air-flow reversing section 13 of air duct 11. In this embodiment, multi-tube heat exchanger 15 has a semicircular cross-section.

Fig. 4 depicts an air conditioner using a multi-tube heat exchanger 16 according to a third embodiment of the present invention. Heat exchanger 16 is disposed in air-flow reversing section 14 of air duct 12. In this embodiment, multi-tube heat exchanger 16 has a trapezoidal cross-section.

Thus, when the multi-tube heat exchanger is employed as the heat exchanger according to the present invention, a cross-sectional shape may be freely selected. The cross-sectional shape may be freely designed according to considerations such as the shape of the air-flow reversing section, the space available for installation of the air duct, and the like. Therefore, use of such a multi-tube heat exchanger further increases the space efficiency of the heat exchanger and the air conditioner including such a heat exchanger.

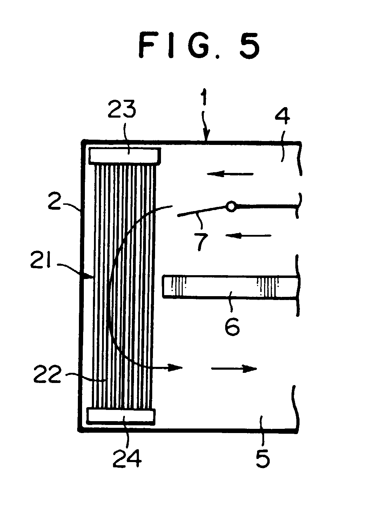

Fig. 5 is a partial cross-sectional view of an air conditioner using a multi-tube heat exchanger 21 according to a fourth embodiment of the present invention. In this embodiment, heat transfer tubes 22 of heat exchanger 21 extend substantially in a horizontal direction. Heat transfer tubes 22 are fluidly interconnected between a pair of tanks 23 and 24. Heat exchanger 21 is disposed in air-flow reversing section 2 of air duct 1. In this embodiment, the direction of air flow is reversed in the heat exchanger body of heat exchanger 21, and the air flow to be reversed in flow direction flows extensively along the direction of heat transfer tubes 22. Therefore, the air flow resistance in heat exchanger 21 may be further decreased, as compared with the embodiment depicted in Fig. 1.

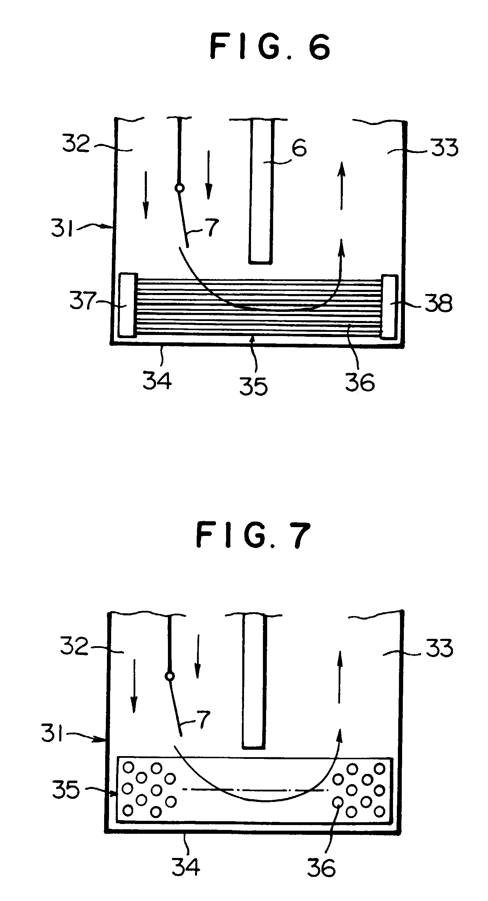

Fig. 6 is a partial cross-sectional view of an air conditioner using a multi-tube heat exchanger 35 according to a fifth embodiment of the present invention. In this embodiment, first air path 32 and second air path 33 of air duct 31 extend substantially in a vertical direction. Heat exchanger 35 is disposed in air-flow reversing section 34 of air duct 31 formed at a common vertical bottom portion of first and second air paths 32 and 33. Heat transfer tubes 36 of heat exchanger 35 are fluidly interconnected between a pair of tanks 37 and 38. In this embodiment, heat transfer tubes 36 extend substantially in a horizontal direction, and the air flow to be reversed in flow direction flows extensively along the direction of heat transfer tubes 36. Therefore, the air flow resistance in heat exchanger 35 may be further reduced.

Fig. 7 is a partial cross-sectional view of an air conditioner according to a modification of the embodiment depicted in Fig. 6. In this embodiment, heat transfer tubes 36 extend in a direction across the air flow reversed in heat exchanger 35, as opposed to the embodiment depicted in Fig. 6. In such a structure, a more effective heat exchange may occur between the air and heat transfer tubes 36 in heat exchanger 35 as well as improved space efficiency.

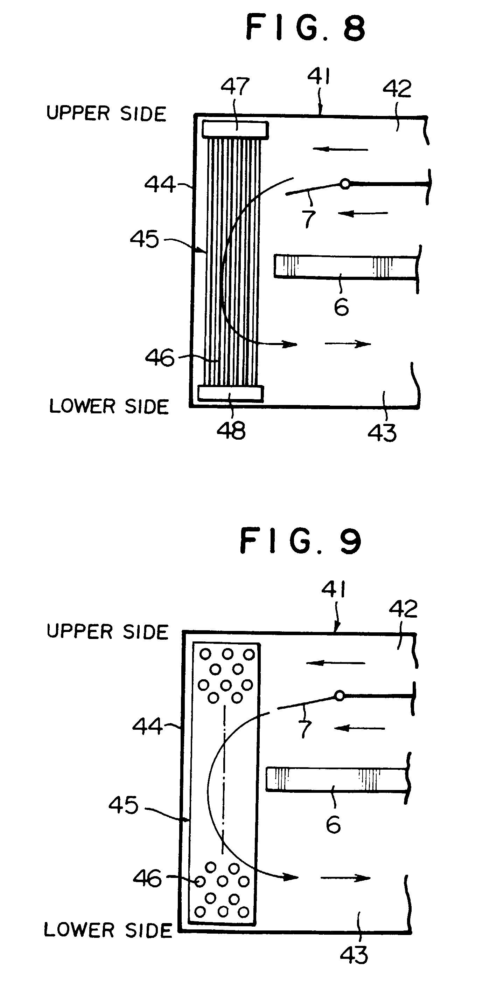

Fig. 8 is a partial cross-sectional view of an air conditioner using a multi-tube heat exchanger 45 according to a sixth embodiment of the present invention. In this embodiment, air duct 41 and first and second air paths 42 and 43 formed in air duct 41 extend in a substantially horizontal direction, and air-flow reversing section 44 of air duct 41 is positioned at one end of air duct 41. First air path 42 for inflow air is positioned at an upper side, and second air path 43 for outflow air is positioned at a lower side. First and second air paths 42 and 43 are adjacent to each other and separated by partition 6. Heat exchanger 45 is disposed in air-flow reversing section 44 of air duct 41, so that heat transfer tubes 46 which fluidly interconnect a pair of tanks 47 and 48, extend in a substantially vertical direction. In such a structure, air flows downward in heat exchanger 45 and extensively along the direction of heat transfer tubes 46. Therefore, the air flow resistance in heat exchanger 45 may be reduced. In addition, condensed water flows downward along heat transfer tubes 46, and the drainage capabilities of heat exchanger 45 may also be improved.

Fig. 9 is a partial cross-sectional view of an air conditioner according to a modification of the embodiment depicted in Fig. 8. In this embodiment, heat transfer tubes 46 extend in a direction across the air flow reversed in heat exchanger 45, as opposed to that described in the embodiment depicted in Fig. 8. In such a structure, an improved heat exchange may occur between the air and heat transfer tubes 46 in heat exchanger 45 and improved space efficiency may be obtained.

## Claims

1. A heat exchanger comprising a heat exchanger body including means for reversing a direction of air flow within said heat exchanger body, whereby said means for reversing said direction of air flow comprises a portion of said heat exchanger body formed substantially orthogonally to at least one partition.

2. The heat exchanger of claim 1, wherein said heat exchanger is a multi-tube heat exchanger comprising a pair of tanks separated from each other and a plurality of heat transfer tubes fluidly interconnected between said pair of tanks.

3. The heat exchanger of claim 2, wherein each of said heat transfer tubes has a circular cross section.

4. The heat exchanger of claim 2, wherein said heat transfer tubes extend in a substantially vertical direction.

5. The heat exchanger of claim 2, wherein said heat transfer tubes extend in a substantially horizontal direction.

6. The heat exchanger of claim 2, wherein said heat exchanger has a rectangular cross-section orthogonal to said heat transfer tubes.

7. The heat exchanger of claim 2, wherein said heat exchanger has a semicircular cross-section orthogonal to said heat transfer tubes.

8. The heat exchanger of claim 2, wherein said heat exchanger has a trapezoidal cross-section orthogonal to said heat transfer tubes.

9. An air conditioner having an air path with an air-flow reversing section and a heat exchanger provided in said air-flow reversing section, said heat exchanger comprising a heat exchanger body including means for reversing a direction of air flow within said heat exchanger body, whereby said means for reversing said direction of air flow comprises a portion of said heat exchanger body formed substantially orthogonally to at least one partition.

10. The air conditioner of claim 9, wherein said heat exchanger is a multi-tube heat exchanger comprising a pair of tanks separated from each other and a plurality of heat transfer tubes fluidly interconnected between said pair of tanks.

11. The air conditioner of claim 10, wherein each of said heat transfer tubes has a circular cross-section.

12. The air conditioner of claim 10 or 11, wherein said heat transfer tubes extend in a substantially vertical direction.

13. The air conditioner of claim 10 or 11, wherein said heat transfer tubes extend in a substantially horizontal direction.

14. The air conditioner of claim 10 or 11, wherein said heat exchanger has a rectangular cross-section orthogonal to said heat transfer tubes.

15. The air conditioner of claim 10 or 11, wherein said heat exchanger has a semicircular cross-section orthogonal to said heat transfer tubes.

16. The air conditioner of claim 10 or 11, wherein said heat exchanger has a trapezoidal cross-section orthogonal to said heat transfer tubes.

17. The air conditioner of claim 10 or 11, wherein said air path includes a first air path and a second air path each fluidly connected to said heat exchanger, said first and said second air paths being adjacent to each other, substantially in parallel to each other, and separated from each other by said at least one partition.

18. The air conditioner of claim 17, further comprising at least one switching damper to control air flow in said first air path.

19. The air conditioner of claim 17 or 18, wherein said first and said second air paths extend in a substantially horizontal direction.

20. The air conditioner of claim 19, wherein said first and said second air paths are disposed substantially at a same vertical position.

21. The air conditioner of claim 19, wherein said first and said second air paths are disposed at different vertical positions, respectively.

22. The air conditioner of claim 19, wherein said heat transfer tubes extend in a substantially vertical direction.

23. The air conditioner of claim 19, wherein said heat transfer tubes extend in a substantially horizontal direction.

24. The air conditioner of claim 17 or 18, wherein said first and said second air paths extend in a substantially vertical direction.

25. The air conditioner of claim 24, wherein said heat transfer tubes extend in a substantially horizontal direction.

26. The air conditioner of claim 25, wherein said heat transfer tubes extend from said first air path toward said second air path.

27. The air conditioner of claim 25, wherein said heat transfer tubes extend in a direction substantially perpendicular to a direction from said first air path toward said second air path.

28. The air conditioner of claim 24, wherein said air-flow reversing section is formed at a common vertical bottom portion of said first and said second air paths.
